# EUROPÄISCHE PATENTSCHRIFT

(11) **EP 1 697 061 B1**
(45) Veröffentlichungstag und Bekanntmachung des Hinweises auf die Patenterteilung: **27.02.2008**
(21) Anmeldenummer: 04804288.1
(22) Anmeldetag: 23.12.2004
(51) Int. Cl.: B05C 5/02

(54) **VERFAHREN ZUM ERKENNEN EINER AUF EINEM SUBSTRAT AUFZUBRINGENDEN STRUKTUR MIT MEHREREN KAMERAS SOWIE EINE VORRICHTUNG HIERFÜR**
METHOD FOR THE RECOGNITION OF A STRUCTURE WHICH IS TO BE APPLIED TO A SUBSTRATE, USING SEVERAL CAMERAS AND DEVICE THEREFOR
PROCEDE POUR RECONNAITRE UNE STRUCTURE A APPLIQUER SUR UN SUBSTRAT, AU MOYEN DE PLUSIEURS CAMERAS, ET DISPOSITIF A CET EFFET

(30) Priorität: 23.12.2003 DE 10361018
(43) Veröffentlichungstag der Anmeldung: 06.09.2006
(73) Patentinhaber: QUISS GMBH, 82178 Puchheim (DE)
(72) Erfinder: TOMTSCHKO, Andreas, 82223 Eichenau (DE); BERGER, Mirko, 80339 München (DE); LINNENKOHL, Jan, 81241 München (DE); RAAB, Roman, 81827 München (DE)
(74) Vertreter: Ascherl, Andreas
(86) Internationale Anmeldenummer: PCT/EP2004/014697
(87) Internationale Veröffentlichungsnummer: WO 2005/063407

(56) Entgegenhaltungen:
- DE-A- 10 048 749
- FR-A- 2 817 618
- US-A- 4 724 302
- US-A- 5 402 351
- US-B2- 6 541 757

## Beschreibung

Die vorliegende Erfindung betrifft ein Verfahren zum Erkennen einer auf einem Substrat aufzubringenden Struktur mit zumindest zwei bzw. mehreren Kameras gemäß dem Oberbegriff von Anspruch 1 sowie eine entsprechende Vorrichtung hierfür.

Herkömmlicherweise werden bislang zum Erkennen einer auf einem Substrat aufzubringenden Struktur optische Vermessungen durchgeführt, wobei häufig verschiedene Systeme zur vollautomatischen Prüfung der Struktur, u.a. Klebstoff und Dichtmittelraupen, verwendet werden. Hierzu werden mehrere Videokameras auf die zu erkennende Struktur gerichtet, wobei zusätzlich ein Beleuchtungsmodul erforderlich ist, das zur Erzeugung eines kontrastreichen Kamerabildes dient.

Hierbei besteht Bedarf nach einem Verfahren zum Erkennen einer auf einem Substrat aufzubringenden Struktur für zumindest zwei bzw. mehrere Kameras, welches eine Auftragsstruktur bzw. Kleberspur mit hoher Genauigkeit und Geschwindigkeit während des Auftragens überwacht. Um eine fehlerfreie Überwachung mit mehreren Kameras zu ermöglichen, ist es von wesentlicher Bedeutung, dass die Bildungsauswertung der einzelnen Kameras derart vorgenommen wird, dass die Software zur Bewertung der aufgenommenen Bilder diese Daten in geeigneter Weise verarbeiten kann.

Problematisch ist hierbei ferner ein bahnförmige Verlauf der Kleberspur auf dem Substrat, da die Kleberspur in Abhängigkeit von der Bewegung der Auftragseinrichtung relativ zu dem Substrat von dem Überwachungsbereich einer Kamera in den Überwachungsbereich einer anderen Kamera wechselt.

Dokument US-B-6 541 757 offenbart eine Vorrichtung und ein Verfahren gemäß die erste Teilen der Ansprüche 1 und 12.

Dokument US-A-5 402 351 offenbart eine mit Kameras ausgestattet Vorrichtung.

Daher ist es Aufgabe der vorliegenden Erfindung, ein Verfahren zum Erkennen einer auf einem Substrat aufzubringenden Struktur für zumindest zwei bzw. mehreren Kameras bereitzustellen, welches die Überwachung einer Auftragsstruktur bzw. Kleberspur mit hoher Genauigkeit und Geschwindigkeit insbesondere während des Auftragens der Kleberspur auf dem Substrat ermöglicht.

Ferner ist es Aufgabe der vorliegenden Erfindung, eine geeignete Vorrichtung zur Durchführung des erfindungsgemäßen Verfahrens bereitzustellen.

Diese Aufgaben werden verfahrenstechnisch mit den Merkmalen von Anspruch 1 sowie vorrichtungstechnisch mit den Merkmalen von Anspruch 14 gelöst.

Bei dem erfindungsgemäßen Verfahren wird die aufzubringende Struktur von einer Auftragseinrichtung auf das Substrat aufgebracht, und daraufhin wird die durch die Auftragseinrichtung auf dem Substrat aufgebrachte Struktur von den Kameras derart überwacht, dass die Kameras zumindest mit einem Überlappungsbereich auf die aufgebrachte Struktur ausgerichtet sind, wobei die aufgebrachte Struktur, insbesondere die Kanten der Klebespur, auf einer umlaufenden Bahn übermittelt wird, und wobei die umlaufende Bahn derart vordefiniert ist, dass die aufgebrachte Struktur nach dem Aufbringen des Substrats die umlaufende Bahn schneidet. Die umlaufende Bahn bildet somit einen vorbestimmten und vordefinierten Bereich um die Auftragseinrichtung, dass die Klebstoffspur unabhängig vom Verfahrweg des Roboters bzw. der Auftragseinrichtung überwacht werden kann und in einfacherer Art und Weise mittels einer Software ausgewertet werden kann. Dadurch kann die Auftragsstruktur bzw. Klebespur mit hoher Geschwindigkeit während des Auftragens auf dem Substrat überwacht werden, insbesondere wenn die Kameras ortsfest an der Auftragseinrichtung angeordnet sind, und wenn die umlaufende Bahn zur Ermittlung der Kleberspur eine geschlossene Form um die Auftragseinrichtung bildet, wobei die Kleberspur auf der umlaufenden Bahn auf dem Substrat gemäß einer Projektion überwacht wird.

Gemäß der Ausführungsform wird die Kleberspur auf der umlaufenden Bahn in Form eines im wesentlichen kreisförmigen Calipers ermittelt. Ein derartiger Kreiscaliper ermöglicht die Weiterverarbeitung der auf dem Kreiscalipers aufgenommene Daten mittels einer Software, welche aufgrund der einfachen geometrischen Form vorteilhaft implementiert und verarbeitet werden kann.

Gemäß einer weiteren Ausführungsform wird die Kleberspur auf der umlaufenden Bahn im wesentlichen in elliptischer, polygonaler Form oder als Linienzug ermittelt.

Wenn der Mittelpunkt oder das Zentrum der umlaufenden Bahn im wesentlichen mit der Stelle übereinstimmt, welche der von der Auftragseinrichtung bezüglich der Kleberspur projizierten Stelle auf dem Substrat entspricht, dann erreicht die Kleberspur unabhängig vom Verfahrweg die umlaufende Bahn im wesentlichen stets in einem gleichbleibenden Abstand, um zur Ermittlung auch einen engen Radius des Klebstoffverlaufs überwachen zu können.

Gemäß einer vorteilhaften Ausführungsform der Erfindung überwachen drei Kameras die aufgebrachte Struktur mit jeweils einem Überlappungsbereich zur benachbarten Kamera um die Auftragseinrichtung auf der umlaufenden Bahn. Somit kann der Verlauf der Klebstoffspur in jeglicher Richtung von einer oder zwei Kameras gleichzeitig überwacht werden.

Vorteilhafterweise überwacht jede Kamera einen Teil der umlaufenden Bahn derart, dass die einzelnen Teile der umlaufenden Bahn der Kameras gemeinsam mit den entsprechenden Überlappungsbereichen eine geschlossene Umlaufbahn bilden, welche umlaufend um die Auftragseinrichtung als Überwachungsbereich verläuft.

Gemäß einer Ausführungsform der Erfindung überwacht jede Kamera ein Segment der umlaufenden Bahn im wesentlichen in Form einer Kreisbahn unter Bildung eines kreisförmigen Calipers. Dabei bilden die Winkelwerte der Kreisbahn von 0 bis 360° ein globales Koordinatensystem, wobei den Bildern der einzelnen Kameras jeweils ein Segment der Kreisbahn mit jeweils angrenzenden Überlappungsbereichen zugeordnet wird. Dadurch können Fehler beim Übergang von einer Kamera zur nächsten Kamera vermindert werden.

Besonders vorteilhaft ist es, dass die Winkelwerte der Kreisbahn von 0 bis 360° ein globales Koordinatensystem der einzelnen Kameras bilden, wobei den Bildern der einzelnen Kameras ein Segment der Kreisbahn zugeordnet wird. Als Folge davon kann der Verlauf der Kleberspur von jeweils zumindest einer aktiven Kamera verfolgt werden, wodurch mit relativ einfachen Mitteln Aussagen über die gesamte Kleberspur sowie deren Lage bzw. Verlauf getroffen werden kann.

Gemäß einer bevorzugten Ausführungsform deckt eine erste Kamera einen Winkelbereich von -10° bis 130° eine zweite Kamera einen Winkelbereich von 110° bis 250° und eine dritte Kamera einen Winkelbereich von 230° bis 10° ab, wenn drei Kameras verwendet werden.

Darüber hinaus ist es von Vorteil, wenn bei dem Verlauf der Kleberspur von einer Kamera zur nächsten automatisch umgeschaltet wird, wenn die Kleberspur von dem Segment der Kreisbahn einer Kamera über den Überlappungsbereich in das Segment der Kreisbahn einer anderen Kamera verläuft. Als Folge davon ist es möglich, dass dem Verlauf der Spur bzw. der Lage der Spur sicher gefolgt werden kann und diese entsprechend voraussehbar sind. Somit kann rechtzeitig ein voll automatisches Umschalten der benachbarten Kameras erfolgen, so dass sich die Parametrierzeiten verringern.

Ferner ist es vorteilhaft, wenn die Kante der Kleberspur auf einer Kreisbahn ermittelt wird, um die Klebstoffspur um die Auftragseinrichtung herum bei einem beliebigen Verlauf jeweils in einem definierten Bereich zu erfassen. Gemäß einer bevorzugten Ausführungsform stimmt der Mittelpunkt der Kreisbahn oder der umlaufenden Bahn im wesentlichen mit der Stelle überein, aus welcher der Kleber zur Bildung der Kleberspur austritt, wobei jede Kamera zumindest ein Segment des aus der Kreisbahn gebildeten Kreises überwacht.

Wenn jede Kamera zumindest einen Überlappungsbereich mit zumindest einer angrenzenden Kamera überwacht, können Fehler beim Übergang von einer Kamera zur nächsten vermindert werden.

Vorteilhafterweise wird eine Kalibrierung der einzelnen Kameras vorgenommen, um gemäß dem Kreiscaliper die Winkelzugehörigkeit der einzelnen Kameras vorzunehmen, wobei insbesondere ein Kreisbogen der Kalibriervorrichtung mit Markierungsstellen mit 0°, 120° und 240° für drei Kameras verwendet wird. Dadurch kann ein globales polares Koordinatensystem hinsichtlich der Winkelzugehörigkeit für die einzelnen Kameras auf dem Kreiscaliper um die Auftragseinrichtung herum für eine vereinfachte softwareseitige Verarbeitung verwendet werden.

Gemäß einer bevorzugten Ausführungsform der Erfindung wird von jeder Kamera lediglich ein Streifen des Kamerabildes zur Bildung einer Bildsequenz aus den einzelnen Streifen der Kamerabilder verarbeitet, wobei die geschlossene umlaufende Bahn aus den Streifen der einzelnen Kamerabilder zusammengefügt wird. Durch die Verarbeitung der Bildstreifen unter Bildung einer Bildsequenz kann die Bildaufnahmefrequenz entsprechend der Datenverminderung durch die Aufnahme lediglich eines Streifens des Bildes erhöht werden, so dass die Geschwindigkeit der Überwachung der Auftragsstruktur gesteigert werden kann.

Mit vorliegender Erfindung wird eine Vorrichtung zum Erkennen einer auf einem Substrat aufzubringenden Struktur, vorzugsweise eine Kleberraupe oder Kleberspur, zur Durchführung eines erfindungsgemäßen Verfahrens nach Anspruch 1 bis 11 bereitgestellt, wobei zumindest ein Beleuchtungsmodul und eine Sensoreinheit vorgesehen ist. Hierzu ist die Sensoreinheit aus zumindest zwei bzw. mehreren Kameras aufgebaut, welche um die Einrichtung zum Auftragen der Struktur vorgesehen und angeordnet sind sowie auf die Einrichtung zum Auftragen der Struktur jeweils ausgerichtet sind, wobei die Kameras mit zumindest einem Überlappungsbereich auf die aufgebrachte Struktur ausgerichtet sind, und wobei die aufgebrachte Struktur, insbesondere die Kanten der Kleberspur, auf einer umlaufenden Bahn um die Auftragseinrichtung ermittelt wird und wobei die umlaufende Bahn derart vordefiniert ist, dass die aufgebrachte Struktur nach dem Aufbringen auf dem Substrat die umlaufende Bahn schneidet. Dadurch ist es möglich, dass der Verfahrweg der Vorrichtung über einem Substrat bzw. ein Verfahrweg des Substrats bzgl. der Auftragsvorrichtung stets in allen Richtungen durch die Ausrichtung der Kameras auf die Auftragseinrichtung mittels der umlaufenden Bahn überwacht werden kann.

Wenn sich die axiale Längsachse der einzelnen Kameras in Blickrichtung im wesentlichen mit der axialen Längsachse der Auftragseinrichtung schneidet, so ist es gemäß einer derartigen Weiterbildung vorteilhaft, dass ein enger Bereich um die Auftragseinrichtung mit geeigneter Auflösung und hoher Bildaufnahmefrequenz überwacht werden kann.

Gemäß einer bevorzugten Ausführungsform sind einzelne Kameras, insbesondere 3 Kameras, in Umfangsrichtung in jeweils gleichem Abstand voneinander angeordnet.

Vorteilhafterweise werden die einzelnen Kameras derart verschaltet, dass die Bilder der Kameras in einer Bildsequenz gespeichert werden, so dass diese Bilder synchron und parallel sowie zugeordnet aufgenommen werden können.

Für eine höhere Geschwindigkeit zur Verarbeitung der von den Kameras aufgenommenen Bildern ist es vorteilhaft, wenn von jeder Kamera lediglich ein Streifen des Bildes unter Bildung eines Teils der Bildsequenz aufgenommen wird.

Gemäß einer Ausgestaltung einer Erfindung bilden die Kameras einen Kreiscaliper, dessen Mittelpunkt die Auftrageinrichtung der Struktur bildet. Dabei können ein oder mehrere kreisförmige Caliper verwendet werden, die es ermöglichen, dass die Ermittlung der Kante der Kleberspur auf einer Kreisbahn stattfindet.

Ein weiterer Vorteil besteht darin, wenn jede Kamera einen Teil der umlaufenden Bahn derart überwacht, dass die einzelnen Teile der umlaufenden Bahn der Kameras gemeinsam mit den Überlappungsbereichen eine geschlossene umlaufende Bahn bilden, welche als Überwachungsbereich auf dem Substrat um die Auftragseinrichtung umlaufend verläuft.

Gemäß einer bevorzugten Ausführungsform weisen die einzelnen Kameras einen Überlappungsbereich von jeweils mindestens 10° zur nächsten Kamera auf. Dieser Überlappungsbereich ermöglicht ein vollautomatisches Umschalten von benachbarten Kameras, wenn die Klebstoffspur von dem Überwachungsbereich einer Kamera in den nächsten verläuft, da die Auswahl der Kamera nicht gebunden an die Roboterposition oder eine zeitliche Komponente gebunden ist, sondern sich auf die aktuellen Inspektionsergebnisse bezieht, d.h. auf der Anordnung auf der Kreisbahn des Kreiscalipers bzw. auf dem dadurch gebildeten globalen Koordinatensystem.

Darüber hinaus ist es von Vorteil, wenn zur Kalibrierung der einzelnen Kameras für die Zuordnung der Winkelzugehörigkeit eine Kalibrierscheibe mit einzelnen Formelementen verwendet wird, wobei diese Formelemente insbesondere einen Winkelabstand von im wesentlichem 10° aufweisen. Dadurch kann der Skalierungsfaktor, die Winkelzugehörigkeit und der Mittelpunkt sowie der Radius des Suchkreises für die einzelnen Kameras zugeordnet werden. Erfindungsgemäß weist die Kalibrierscheibe zumindest drei Markierungsstellen auf, die in einem Kreisbogen der Kalibrierscheibe von im wesentlichen 0°, 120° und 240° angeordnet sind, um drei Kameras zu kalibrieren.

Weitere vorteilhafte Ausgestaltungen der Erfindung sind Gegenstand der übrigen Unteransprüche.

Anhand der nachfolgenden Zeichnungen werden beispielhaft vorteilhafte Ausgestaltungen der Erfindung dargestellt.

Figur 1 zeigt eine schematische Seitenansicht einer erfindungsgemäßen Vorrichtung zum Auftragen und Überwachen einer Klebstoffspur.

Figur 2 zeigt eine perspektivische Ansicht der erfindungsgemäßen Vorrichtung von Figur 1.

Figur 3 zeigt den Verfahrweg der erfindungsgemäßen Vorrichtung zum Aufbringen und Überwachen einer Klebstoffspur.

Figur 4 zeigt einen anderen Verfahrweg der erfindungsgemäßen Vorrichtung bzgl. des Umschaltens der relevanten Kameras.

Figur 5 ist eine Darstellung eines einzigen Bilds, dass aus drei Bildstreifen von drei Kameras zur Online-Überwachung zusammengesetzt ist.

Figur 6 erläutert den prinzipiellen Aufbau der Software.

Figur 7 zeigt schematisch eine erfindungsgemäße Kalibriervorrichtung zum Kalibrieren der einzelnen Kameras der erfindungsgemäßen Vorrichtung zum Erkennen einer auf einem Substrat aufzubringenden Struktur.

Fig. 8 zeigt eine schematische Ansicht der Klebstoffspur mit dem Kreiscaliper und den Bildstreifen der einzelnen Kameras.

Fig. 9 stellt schematisch einen gekrümmten Verlauf der Klebstoffspur sowie die Überwachung durch den Kreiscaliper dar.

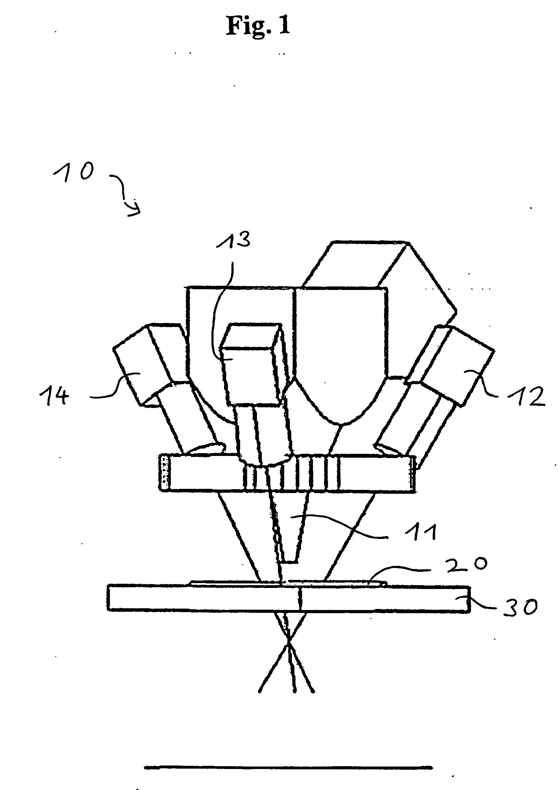

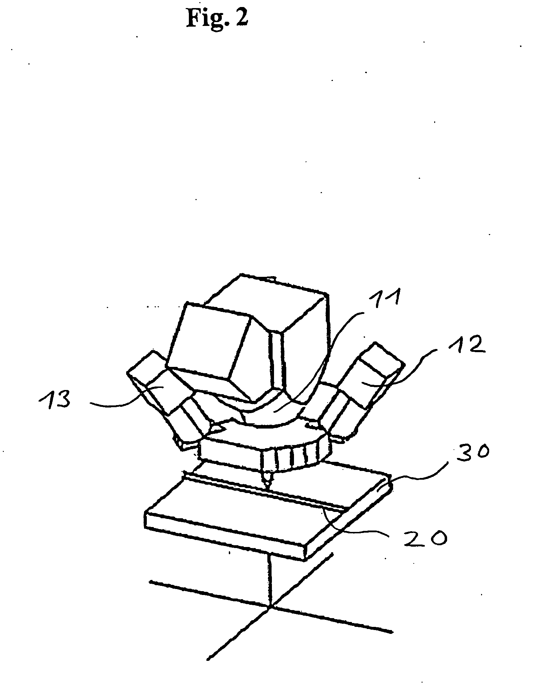

Im Weiteren wird nun der Aufbau der erfindungsgemäßen Vorrichtung zum Erkennen einer auf einem Substrat aufzubringenden Struktur gemäß den Figuren 1 und 2 erläutert.

Mit dem Bezugszeichen 10 ist die schematisch dargestellte Vorrichtung zum Aufbringen und Erkennen einer Kleberspur gezeigt. Dabei ist im Zentrum der erfindungsgemäßen Vorrichtung eine Auftragseinrichtung 11 angeordnet, durch welche eine Klebstoffspur 20 auf ein Substrat bzw. auf ein Blech 30 in der Fig. 1 von rechts nach links aufgebracht wird. Um die Auftragseinrichtung 11 sind in einem Kreis drei Kameras 12, 13, 14 in gleichmäßigem Abstand angeordnet, die auf die Auftragseinrichtung 11 jeweils ausgerichtet sind. Wie aus Figur 1 ersichtlich, schneiden sich die axialen Längsachsen der drei Kameras 12, 13, 14 mit der axialen Längsachse der Auftragseinrichtung 11 unmittelbar unterhalb des Substrats 30, sodass der Fokus der einzelnen Kameras unmittelbar um den Bereich der Auftragseinrichtung 11, insbesondere auf einer Kreisbahn, angeordnet ist.

Bei der Klebstoffinspektion wird nun entweder die Auftragseinrichtung mit den Kameras oder das Substrat verfahren, wobei gleichzeitig die Klebstoffspur 20 auf das Substrat 30 mittels der Auftragseinrichtung 11 aufgebracht wird und wobei die Kameras 12, 13, 14 die aufgebrachte Struktur überwachen. Es ist hierzu möglich, die Auftragseinrichtung mit den Kameras oder das Substrat zu verfahren, um die Klebstoffspur in einem gewünschten Verlauf auf dem Substrat 30 aufzubringen. Dadurch können die mitfahrenden Kameras simultan mit dem Auftragen die Klebstoffspur unabhängig von dem Verfahrweg überwachen. In Fig. 2 verläuft die Klebstoffspur 20 von links nach rechts, wobei diese als durchgezogene Linie dargestellt ist. Rechts von der Auftragseinrichtung 11 ist der beabsichtigte Verlauf der Klebstoffspur 20 mit gestrichelter Linie angezeigt.

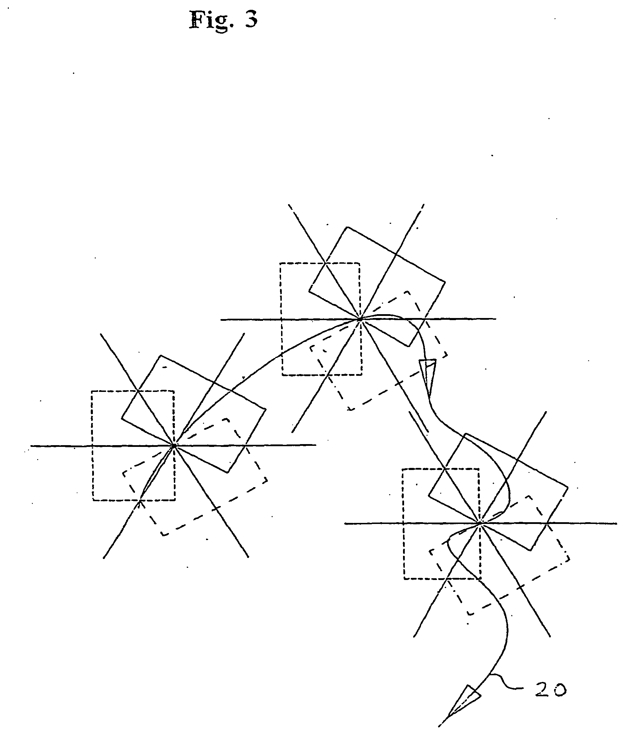

Figur 3 zeigt nun den Verlauf der Klebstoffspur 20, welcher mittels Pfeilen angezeigt wird, wobei an drei Stellen die Ausrichtung bzw. der Sichtbereich der einzelnen drei Kameras dargestellt ist. Die Sichtbereiche der einzelnen drei Kameras sind jeweils durch ein Rechteck mit durchgezogener Linie, ein Rechteck mit weit gestrichelten Linien und ein Rechteck mit eng gestrichelten Linien dargestellt. Wie aus der Figur 3 ersichtlich, bleibt die Ausrichtung der einzelnen Sichtbereiche der Kameras stets konstant, wobei lediglich die gesamte Vorrichtung verfahren wird.

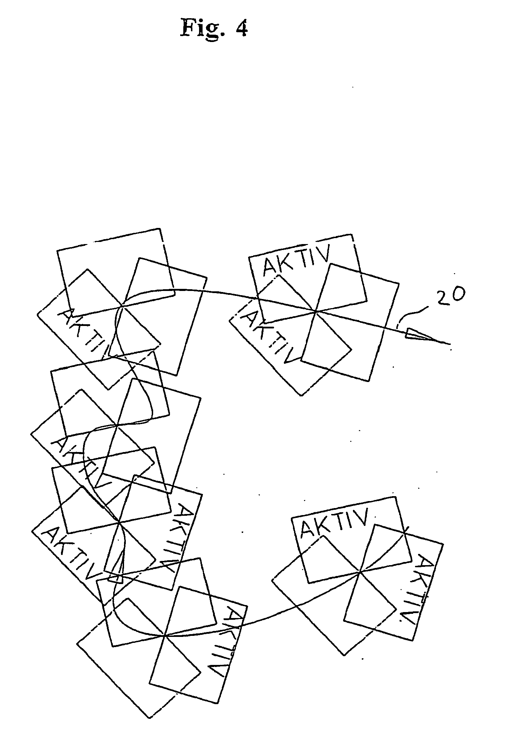

Figur 4 zeigt einen weiteren Verlauf einer Klebstoffspur 20, wobei jeweils angezeigt ist, welcher Sichtbereich aktiv ist, d.h. welche Kamera mit dem entsprechenden als Rechteck dargestellten Sichtbereich beim Abfahren der Klebstoffspur aktiv ist. Hierbei ist zu beachten, dass einerseits nur eine Kamera an einer Stelle aktiv ist und andererseits jedoch zwei Kameras an einer anderen Stelle aktiv sind. Dies ist abhängig von dem Verlauf der Klebstoffspur bezüglich des später beschriebenen Kreiscalipers, mit welchem die Überwachung der Klebstoffspur auf dem Substrat vorgenommen wird.

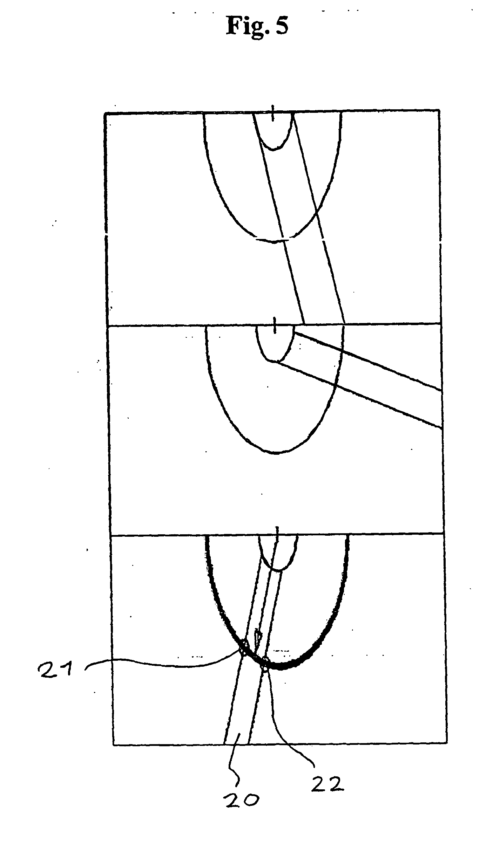

In Figur 5 sind nun drei Bildstreifen dargestellt, die jeweils einen relevanten Bildausschnitt bzw. Bildstreifen der einzelnen drei Kameras von Figur 1 darstellen. Gemäß dem Verfahren kann von jeder Kamera lediglich ein Streifen des Bildes aufgenommen werden, um für eine entsprechende Datenverminderung zu sorgen, sodass die Aufnahmefrequenz erhöht werden kann. Diese einzelnen Bildstreifen der drei Kameras werden zu einem Bild zusammengefügt, wobei die Bildaufnahmen in definierten festen Zeitabständen und unabhängig von der Robotersteuerung für die Auftragseinrichtung erfolgen. Beispielsweise nehmen die Kameras lediglich einen Steifen des Bildes auf, wobei an Stelle einer Bildhöhe von 480 Bildpunkten eine Bildhöhe von rund 100 Bildpunkten (100 Bildzeilen) verwendet wird. Durch diese Partial-Scan-Technik, d.h. ein teilweises Auslesen des Bildaufnahmechips, entstehen nur geringe Datenströme, so dass die Bildaufnahmefrequenz um das entsprechende vielfache erhöht werden kann. Bei der Auswertung der Daten ist es somit möglich, dass die Bilder der einzelnen Kameras synchron und parallel und folglich gleichzeitig erfasst werden können und anschließend zu einem einzigen Bild zusammengefügt werden, wobei die drei Bildstreifen untereinander angeordnet werden. Als Folge davon sind die drei Bilder, d.h. die drei Bildstreifen, sofort hinsichtlich des Ortes und der Zeit zueinander richtig angeordnet sowie zugeordnet und können entsprechend verarbeitet werden. Diese spezielle Bildaufnahmetechnik ermöglicht somit das gleichzeitige und parallele Aufnehmen einzelner Kamerabilder, wodurch es möglich wird, dass beim Einlernen einer Referenzauftragsstruktur lediglich ein einmaliges Abfahren dieser Struktur vorgenommen werden muss, wobei die Bilder aller Kameras in einer Bildsequenz gespeichert werden.

Wenn die Bilder der drei Kameras in einer Bildsequenz gespeichert worden sind, wird beim Einlernen der Referenzkleberspur anschließend eine Parametrierung dieser Referenzspur durchgeführt. Für die Parametrierung wird der Roboterverfahrweg, die Roboterverfahrzeit, die Richtung, die Breite und die Güte der Klebespur verwendet. Somit ergibt sich für die Kleberspur eine Art Vektorkette, wodurch es moglich ist, die hohe Bildaufnahmefrequenz und die vergleichsweise kurzen Teilabschnitte (zwischen 1 und 3 mm) zu erzielen. Die Vektorvisierung hat ferner den Vorteil, dass die Kleberspur in Form einer Vektorkette in einem kameraübergreifenden, globalem Koordinatensystem abgelegt werden kann.

Wie aus dem untersten Streifen von Figur 5 ersichtlich, ist um das Zentrum der Auftragseinrichtung 11 eine Caliper zur Grauwertantastung in Form einer Kreisbahn angeordnet, wobei die beiden Kantenpunkte 21 und 22 der Klebstoffspur 20 auf der Kreisbahn angeordnet sind. Diese Kreisbahn ist derart unterteilt, dass einer ersten Kamera ein Winkelbereich von -10° bis 130°, einer zweiten Kamera ein Winkelbereich von 110° bis 250° und einer dritten Kamera ein Winkelbereich von 230° bis - 10° zugeordnet wird, sodass eine lückenlose Abdeckung mit Überlappungsbereichen der einzelnen Kameras um die Auftragseinrichtung 11 herum ermöglicht wird. Daraus ergibt sich für die drei Bildstreifen ein globales Koordinatensystem, welches sowohl kartesisch als auch polar ausgeführt sein kann.

Falls die Kleberspur nun aus dem Sichtbereich einer Kamera läuft, befindet sich die Kleberspur übergangsweise im Überlappungsbereich der Winkelbereiche der beiden Kameras. Wenn nun die Kleberspur von dem Segment der Kreisbahn der einen Kamera über den Überlappungsbereich in das Segment der Kreisbahn einer anderen Kamera verläuft, wird von der einen zur anderen Kamera automatisch umgeschaltet.

Dies ist insbesondere in Figur 4 durch die aktiven Sichtbereiche der einzelnen Kameras dargestellt.

Die obigen Vorteile werden dadurch erzielt, dass die einzelnen Kameras einen Kreiscaliper bilden, dessen Mittelpunkt die Auftrageinrichtung 11 bildet, wobei die Suche nach den Kanten 21, 22 der Klebstoffspur auf einer Kreisbahn unmittelbar um die Auftragseinrichtung erfolgt. Hierzu ist es wesentlich, dass die einzelnen Kameras auf die Auftragseinrichtung ausgerichtet sind, wobei sich die axialen Längsachsen der einzelnen Kameras mit der Längsachse der Auftragseinrichtung schneiden. Insbesondere wird die Breite des Kantenpaares, der rechten und linken Kante der Kleberspur, der mittlere Grauwert des projizierten Grauwertprofils zwischen dem Kantenpaar, der Randkontrast und der Positionsverlauf mittels einer Bewertungsfunktion softwareseitig verrechnet.

Im Folgenden wird nun eine Teach-In-Lauf bzw. ein Einlernen einer Referenzkleberspur erläutert.

Der Einlernvorgang der Referenzkleberspur kann mittels eines Mausklicks vom Bediener auf die Spur begonnen werden, wodurch die Lage der Kleberspur angezeigt wird. Dies ist ausreichend, um in den nächsten Kamerabildem die Position und Richtung der Kleberspur voll automatisch zu erkennen, da die Bildaufnahmefrequenz entsprechend hoch ist und die einzelnen Bildaufnahmen sehr kurz hintereinander stattfinden, beispielsweise alle 1 mm bis 3 mm. Ab dem Startpunkt findet Bild für Bild die Kleberantastung statt, wobei die im aktuellen Bild gefundene Kleberspurposition und Kleberspurwinkel als A-Priori-Wissen für das kommende Bild verwendet wird. Da die Spurradien zumeist größer als 20 mm betragen, wird somit das vollautomatische Erfassen der Kleberspur möglich, ohne dass ein Mensch das Bild bzw. die Lage der Kleberspur ermitteln bzw. bewerten muss. Als Folge davon kann der Suchbereich eingeschränkt werden, wodurch mittels der hohen Bildaufnahmefrequenz errechnet werden kann, wo die Kleberspur im wesentlichen im nächsten Bild verlaufen wird.

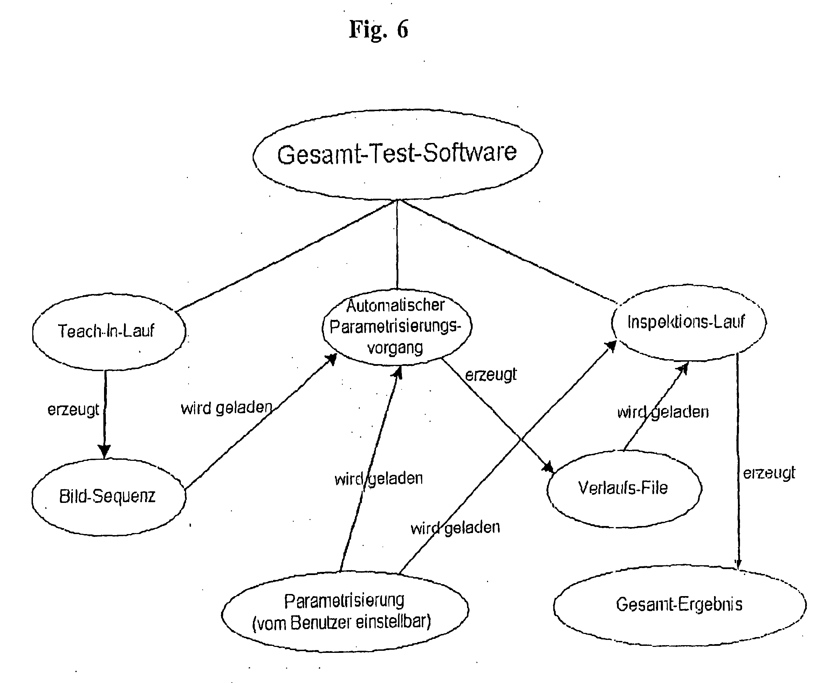

In Figur 6 ist der prinzipielle Aufbau der Software dargestellt, wobei der Teach-In-Lauf bzw. Einlernlauf die Bildsequenz erzeugt, welche daraufhin die automatische Parametrisierung ermöglicht. Diese Parametrisierung kann gegebenenfalls vom Benutzer voreingestellt werden und wird für den Inspektionslauf zusammen mit einem Verlaufs-file für die Inspektion einer aufgebrachten Klebstoffspur verwendet.

Die Onlineüberwachung einer aufgebrachten Klebstoffspur wird nun kurz erläutert. Die in Figur 1 gezeigte Auftragseinrichtung 11 bringt die Klebstoffspur auf das Blech 30 auf, wobei die Auftragseinrichtung 11 mit den Kameras über dem Blech 30 verfahren wird. Jedoch ist auch eine kinematische Umkehr möglich, d.h., dass das Blech 30 verfahren wird und die Auftragseinrichtung mit den Kameras ortsfest angeordnet ist. Die aufgetragene Klebstoffspur 20 wird synchron und parallel von den Kameras 12, 13, 14 auf der gemäß Figur 5 erläuterten Kreisbahn des Kreiscalipers ermittelt und ausgewertet, wobei von jeder Kamera jeweils lediglich ein Streifen des Bildes aufgenommen wird und in einem einzigen Bild unter Bildung einer Bildsequenz zusammengefügt wird. Entsprechend der Datenverminderung durch die Aufnahme von lediglich einem Streifen des Bildes jeder Kamera wird die Bildaufnahmefrequenz erhöht, wobei die einzelnen Bildstreifen in dem zusammengefügten Bild das synchrone und parallele sowie gleichzeitige Erfassen der drei Kamerabilder ermöglichen und wobei die einzelnen Bilder der drei Kameras unmittelbar ortsabhängig zugeordnet werden können. Somit wird eine Onlineüberprüfung der Klebstoffspur in Echtzeiten möglich, welche durch die hohe Bildaufnahmefrequenz sowohl beim Einlernen einer Referenzkleberspur als auch beim Überprüfen der aufgebrachten Kleberspur eine hohe Genauigkeit bei hohen Verfahrgeschwindigkeiten erzielt. Hierbei sind die Informationen über die Klebstoffspur im Klebersuchbereich, die Winkelzuordnung des Sensors, die Kleberbewertung, der Roboterverfahrweg und die Roboterverfahrzeit in einer Verlaufsliste zusammen gefasst.

Gemäß einer Ausführungsform der vorliegenden Erfindung kann eine Bewertungsfunktion zum Auffinden der Kanten der Klebstoffspur, insbesondere eine Fuzzy-Bewertung, verwendet werden. Um die Klebstoffspur zu ermitteln und zu bewerten, werden mittels einer Fuzzy-Bewertung folgende Parameter miteinander verrechnet:

Breite des Kantenpaares (Kante1: linke Kante der Klebstoffspur, Kante 2: rechte Kante der Kleberspur), mittlerer Grauwert des projizierten Grauwertprofils zwischen dem Kantenpaar, Randkontrast (geometrischer Mittelwert der Amplituden der beiden Kanten) und Positionsverlauf (gerichtete Abweichung des Mittelpunkts zwischen den beiden Kleberkanten vom Mittelpunkt des Suchbereichs in Pixel). Durch diese Vielzahl an Parametern kann, auch mit Hilfe der Fuzzy-Bewertungsfunktion, die Klebstoffspur sehr genau beschrieben werden, damit diese sicher automatisch erkannt wird.

Für die erfindungsgemäße Vorrichtung ist das nicht gezeigte Beleuchtungsmodul aus LEDs, insbesondere Infrarot-LEDs, UV-LEDs oder RGB-LEDs, aufgebaut. Um hohe Kontraste bei der Bildaufnahme zu erhalten, können die LEDs geblitzt werden, d.h., dass kurze, starke Stromimpulse auf die Dioden im Bereich von 1,0 bis 0,01 ms aufgebracht werden. Dabei sind insbesondere derartige Leuchtdioden vorteilhaft, die verschiedenfarbiges Licht emittieren können, sodass der Sensoraufbau ohne Umbauten auf andere Klebertypen bzw. Kleberfarben umgestellt werden kann.

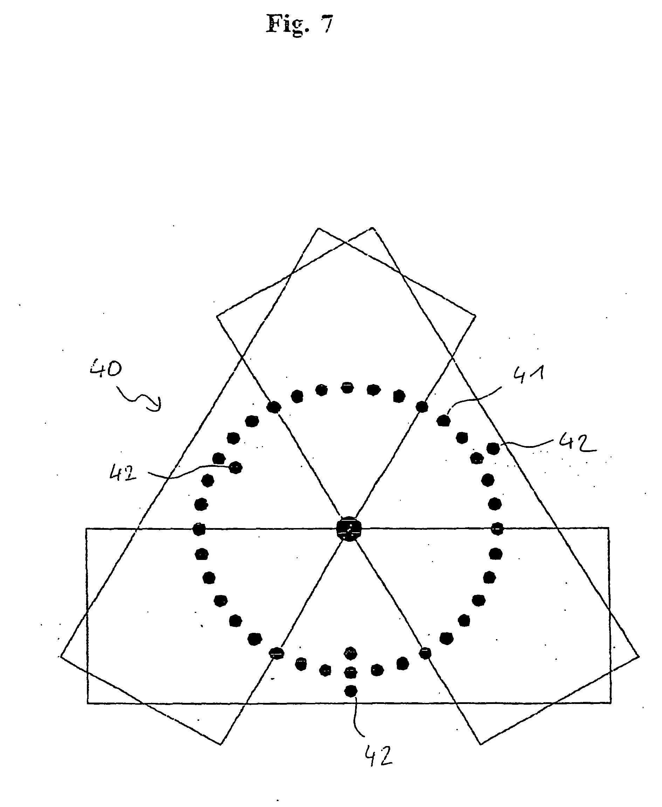

Figur 7 zeigt eine Kalibriereinrichtung 40 in Form einer kreisförmigen Kalibrierscheibe, um den einzelnen Kameras ihren Skalierungsfaktor, ihre Winkelzugehörigkeit und den Mittelpunkt sowie den Radius des Suchkreises zuzuordnen. Die Kalibrierscheibe besteht aus einzelnen auf einer Kreisbahn angeordneten Formelementen bzw. Dots 41, die jeweils in einem Winkelabstand von einem im wesentlichen 10° angeordnet sind. In gleichmäßigen Abstand voneinander sind ferner Markierungsstellen 42 angeordnet, um drei Kameras zu kalibrieren. Mittels einer Ausgleichsrechnung wird aus den Koordinaten der Mittelpunkte der einzelnen Dots zum einen der Skalierungsfaktor der einzelnen Kameras zum anderen der Mittelpunkt sowie der Radius des Suchbereichs berechnet. Durch die Markierungsstellen im Winkel von 0°, 120°, 240° im globalem Koordinatensystem kann die Winkelzuordnung und der jeweilige Sichtbereich der einzelnen Kameras bestimmt werden. Der Sichtbereich der einzelnen Kameras ist insbesondere durch die drei Rechtecke in Figur 7 dargestellt, wobei die Formelemente 41 der Kreisbahn des Kreiscalipers zur Erfassung der Klebstoffspur entsprechen können.

Gemäß einer nicht gezeigten Ausführungsform werden mehrere Kreiscaliper durch mehrere Kameras gebildet, welche um die Auftragseinrichtung angeordnet sind, jedoch in einem unterschiedlichen Radius von dem Mittelpunkt der Auftragseinrichtung angebracht sind. Zur Inspektion einer Auftragsstruktur bzw. Kleberspur werden die Kameras auf einen Kreis bzw. eine Kreisbahn ausgerichtet, dessen Mittelpunkt mit dem Mittelpunkt der Auftragseinrichtung übereinstimmt. Auf dieser Kreisbahn findet die oben erläuterte optische Erfassung der Kleberspur statt.

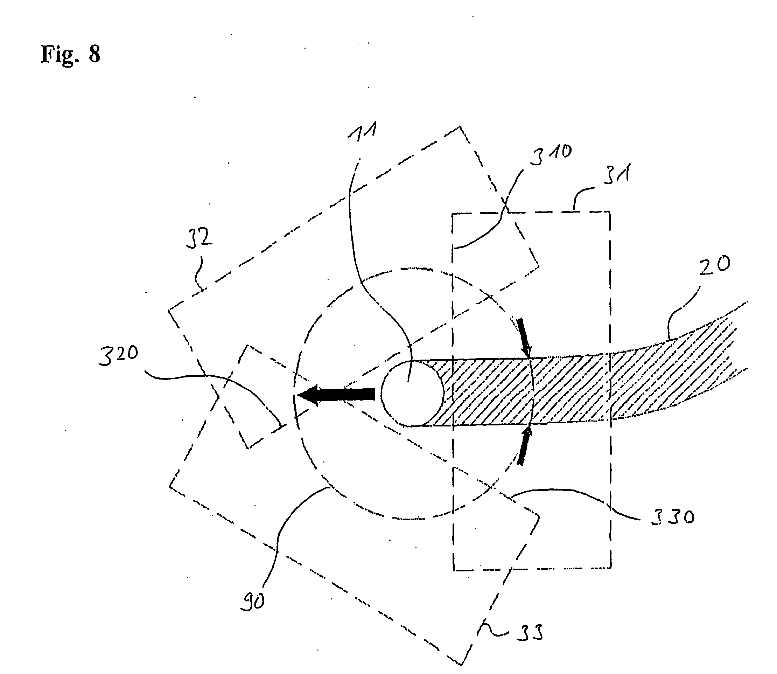

Die auf das Substrat aufgebrachte Klebstoffspur 20, welche von der Düse von der Auftragseinrichtung 11 aufgebracht wird, ist in Figur 8 gezeigt. Bei der Auswertung der aufgebrachten Klebstoffspur 20 wird der bereits erwähnte Kreiscaliper 90 verwendet, der konzentrisch um die Auftragseinrichtung 11 von den einzelnen Kameras vorgesehen ist. Die gestrichelten Rechtecke stellen den Bildstreifen der einzelnen Kameras dar, welche für die Auswertung softwareseitig verwendet wird. Dabei ist das Rechteck 31 als Bildstreifen der ersten Kamera, das Rechteck 32 als Bildstreifen der zweiten Kamera, und das Rechteck 33 als Bildstreifen der dritten Kamera zugeordnet, wobei die einzelnen Bildstreifen der einzelnen Kameras jeweils einen Überlappungsbereich zur benachbarten Kamera aufweisen. Die Grauwertantastung des Kreiscalipers 90 wird in Figur 8 durch das Rechteck 31 der ersten Kamera vorgenommen, wobei insbesondere die mit den kleinen Pfeilen dargestellten Kanten für die Beurteilung der Güte der Klebstoffspur verwendet werden, wie bereits gemäß in Figur 5 beschrieben. In dem in Figur 8 gezeigten Fall ist somit nur die erste Kamera gemäß Bildstreifen 31 aktiv, wie bereits gemäß Figur 3 und 4 erläutert. In dem Überlappungsbereich der einzelnen Bildstreifen 31, 32, 33 verläuft ebenso der Kreiscaliper, so dass in dem Kreissegment des Kreiscalipers 90, welcher im Überlappungsbereich von 2 Bildstreifen 31, 32 und 33 liegt, zwei benachbarte Kameras aktiv werden, wenn die Klebstoffspur 20 in diesem Bereich aufgrund eines bahnförmigen bzw. gekrümmten Verlaufs verschoben wird bzw. verläuft, wie durch den großen Pfeil in Figur 8 schematisch angedeutet.

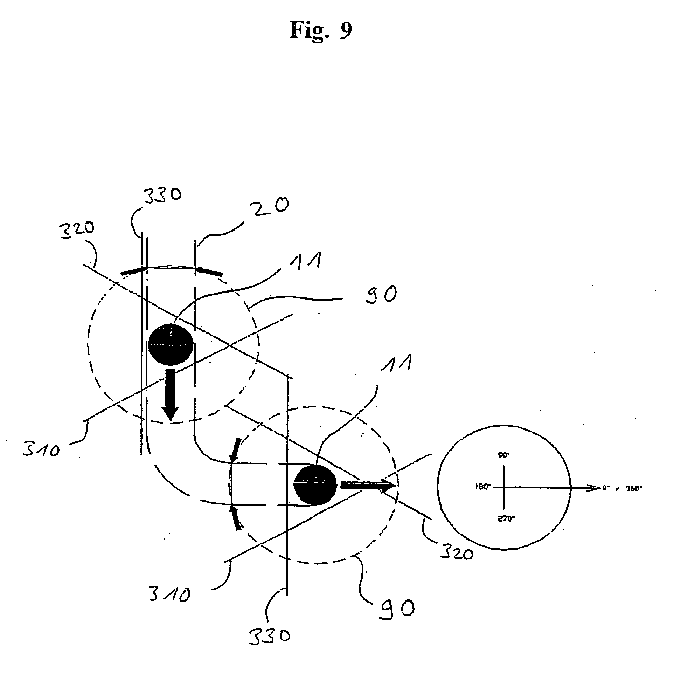

Ein derartiger bahnförmiger Verlauf ist insbesondere in Figur 9 dargestellt, wobei die Klebstoffspur in der ersten Position von oben nach unten verläuft und daraufhin in Figur 9 nach rechts verläuft, wie schematisch durch die zweite Position dargestellt. Aus Gründen der Übersichtlichkeit ist in Figur 9 nicht das gesamte Rechteck 31, 32 und 33 der einzelnen Kameras dargestellt, sondern lediglich die Gerade 310, 320 und 330, welche um die Auftragseinrichtung 11 ortsfest angeordnet sind, da die Kameras ebenso ortsfest um die Auftragseinrichtung angeordnet sind. Als Folge davon verändert sich die Lage der Geraden 310, 320 und 330 bei einem bahnförmigen Verlauf der Klebstoffspur im Hinblick auf die Auftragseinrichtung 11 nicht. Dies führt jedoch dazu, dass die zu überwachende Klebstoffspur 20 mit den als kleinen Pfeilen angeordneten Kanten auf dem Kreiscalipers 90 von einem Bildstreifen zu einem anderen Bildstreifen auf dem Kreiscalipers 90 wandert.

In der oberen Position von Figur 9 befindet sich die Klebespur 20 in dem Bildstreifen 32 auf dem Caliper 90, wie durch die Gerade 320 angedeutet. Dabei ist die linke Kante der Klebstoffspur 20 in der ersten Position nahe an der Geraden 330, wobei jedoch nur die Kamera aktiv ist, welche dem Bildstreifen 32 zugeordnet ist.

Wenn die Klebstoffspur 20 bahnförmig nach unten und rechts verläuft, wie in Figur 9 dargestellt, so wandert als erstes die linke Kante der Klebstoffspur in den Überwachungsbereich zwischen der Geraden 330 und der Geraden 320, so dass als Folge davon neben der Kamera von Bildstreifen 32 auch die Kamera von Bildstreifen 33 auf dem Kreiscaliper 90 aktiv wird.

Wie in der zweiten unteren Position von Figur 9 dargestellt, befindet sich die Klebstoffspur mit den beiden Kanten am Ende des bahnförmigen Verlaufs in dem Bildstreifen 33, der durch die Geraden 330 angedeutet ist. Daher ist nur noch die Kamera aktiv, welche der Bildstreifen 330 zugeordnet ist. Für die Überwachung der Klebstoffspur 20 ergibt sich bei dem gesamten Verlauf ein globales Koordinatensystem aufgrund des um die Auftragseinrichtung 11 angeordneten Kreiscalipers 90, wie durch das globale Koordinatensystem angedeutet, welches hinsichtlich der Auftragseinrichtung 11 konstant angeordnet ist. Daraus ergibt sich, dass für die Software zur Bewertung der Klebstoffspur 20 lediglich der Verlauf auf dem Kreiscalipers 90 berücksichtigt werden muss.

Gemäß nicht dargestellten Ausführungsform, kann der Kreiscaliper auch durch eine umlaufende Bahn bzw. Umlaufbahn im wesentlichen in elliptischer, polytonaler Form oder als Linienzug für die Ermittlung der Klebstoffspur mittels Grauwertantastung vorgesehen sein.

Somit wird ein Verfahren zum Erkennen einer auf einem Substrat aufzubringenden Struktur, vorzugsweise eine Klebstoffspur, mit mindestens zwei Kameras, insbesondere drei oder mehreren Kameras beschrieben, wobei die aufzubringende Struktur von einer Auftragseinrichtung auf das Substrat aufgebracht wird, und wobei die durch die Auftragseinrichtung auf dem Substrat aufgebrachte Struktur von den Kameras derart überwacht, dass die Kameras mit zumindest einem Überlappungsbereich auf die aufgebrachte Struktur aufgerichtet sind, und wobei die aufgebrachte Struktur insbesondere die Kanten der Klebstoffspur, auf einer umlaufenden Bahn um die Auftragseinrichtung ermittelt wird, und wobei die umlaufende Bahn derart vordefiniert ist, dass die aufgebrachte Struktur nach dem Aufbringen auf dem Substrat die umlaufende Bahn schneidet.

## Patentansprüche

1. Verfahren zum Erkennen einer auf einem Substrat aufzubringenden Struktur, vorzugsweise eine Kleberraupe oder Kleberspur, mit mindestens zwei Kameras, insbesondere drei oder mehrere Kameras, **dadurch gekennzeichnet, dass**
die aufzubringende Struktur von einer Auftragseinrichtung auf das Substrat aufgebracht wird,
und die durch die Auftragseinrichtung auf dem Substrat aufgebrachte Struktur von den Kameras derart überwacht wird, dass
die Kameras mit zumindest einem Überlappungsbereich auf die aufgebrachte Struktur ausgerichtet sind, wobei die aufgebrachte Struktur, insbesondere die Kanten der Kleberspur, auf einer umlaufenden Bahn um die Auftragseinrichtung ermittelt wird, und wobei die umlaufende Bahn derart vordefiniert ist, dass die aufgebrachte Struktur nach dem Aufbringen auf dem Substrat die umlaufende Bahn schneidet,
**dadurch gekennzeichnet, dass** jede Kamera ein Segment der umlaufenden Bahn im wesentlichen in Form einer Kreisbahn unter Bildung eines kreisförmigen Calipers überwacht und wobei die Winkelwerte der Kreisbahn von 0 bis 360 ° ein globales Koordinatensystem bilden, wobei den Bildern der einzelnen Kameras ein Segment der Kreisbahn mit jeweils angrenzenden Überlappungsbereichen zugeordnet wird.

2. Verfahren nach Anspruch 1, **dadurch gekennzeichnet, dass** die umlaufende Bahn zur Ermittlung der Kleberspur eine geschlossene Form um die Auftragseinrichtung bildet, wobei die Kleberspur auf der umlaufenden Bahn auf dem Substrat gemäß einer Projektion überwacht wird.

3. Verfahren nach Anspruch 1 oder 2, **dadurch gekennzeichnet, dass** die Kleberspur auf der umlaufenden Bahn in Form eines im Wesentlichen kreisförmigen Calipers ermittelt wird.

4. Verfahren nach Anspruch 1 oder 2, **dadurch gekennzeichnet, dass** die Kleberspur auf der umlaufenden Bahn im wesentlichen in elliptischer, polygonaler Form oder als Linienzug ermittelt wird.

5. Verfahren nach einem der vorhergehenden Ansprüche 1 bis 4, **dadurch gekennzeichnet, dass** der Mittelpunkt oder das Zentrum der umlaufenden Bahn im wesentlichen mit der Stelle übereinstimmt, welche der von der Auftragseinrichtung bezüglich der Kleberspur projizierten Stelle auf dem Substrat entspricht.

6. Verfahren nach einem der vorhergehenden Ansprüche 1 bis 5, **dadurch gekennzeichnet, dass** drei Kameras die aufgebrachte Struktur mit jeweils einem Überlappungsbereich zur benachbarten Kamera um die Auftragseinrichtung auf der umlaufenden Bahn überwachen.

7. Verfahren nach einem der vorhergehenden Ansprüche 1 bis 6, **dadurch gekennzeichnet, dass** jede Kamera einen Teil der umlaufenden Bahn derart überwacht, dass die einzelnen Teile der umlaufenden Bahn der Kameras gemeinsam mit den Überlappungsbereichen eine geschlossene umlaufende Bahn bilden, welche als Überwachungsbereich um die Auftragseinrichtung auf dem Substrat umlaufend verläuft.

8. Verfahren nach einem der vorhergehenden Ansprüche 1 bis 7, **dadurch gekennzeichnet, dass** eine erste Kamera mindestens einen Winkelbereich von -10° bis 130°, eine zweite Kamera mindestens einen Winkelbereich von 110° bis 250° und eine dritte Kamera mindestens einen Winkelbereich von 230° bis 10° abdeckt.

9. Verfahren nach einem der vorhergehenden Ansprüche 1 bis 8, **dadurch gekennzeichnet, dass** bei dem Verlauf der Kleberspur von einer Kamera zur nächsten automatisch umgeschaltet wird, wenn die Kleberspur von dem Segment der Kreisbahn einer Kamera über den Überlappungsbereich in das Segment der Kreisbahn einer anderen Kamera verläuft.

10. Verfahren nach einem der Ansprüche 1 bis 9, **dadurch gekennzeichnet, dass** von jeder Kamera lediglich ein Streifen des Kamerabildes zur Bildung einer Bildsequenz aus den einzelnen Streifen der Kamerabilder verarbeitet wird, wobei die geschlossene umlaufende Bahn aus den Streifen der einzelnen Kamerabilder zusammengefügt wird.

11. Verfahren nach einem der Ansprüche 1 bis 10, **dadurch gekennzeichnet, dass** eine Kalibrierung der einzelnen Kameras zur Zuordnung der Winkelzugehörigkeit vorgenommen wird, wobei insbesondere ein Kreisbogen oder eine Kreisbahn der Kalibriervorrichtung mit Markierungsstellen bei 0°, 120° und 240° für 3 Kameras verwendet wird.

12. Vorrichtung zum Erkennen einer auf einem Substrat aufzubringenden Struktur, vorzugsweise eine Kleberraupe oder Kleberspur, zur Durchführung eines Verfahrens gemäß den Ansprüchen 1 bis 11, wobei zumindest ein Beleuchtungsmodul und eine Sensoreinheit vorgesehen ist, **dadurch gekennzeichnet, dass** die Sensoreinheit aus mindestens zwei Kameras, insbesondere drei oder mehreren Kameras, aufgebaut ist, wobei die Kameras um die Einrichtung zum Auftragen der Struktur vorgesehen sind und an dieser derart angeordnet sind, dass die Kameras jeweils auf die Einrichtung zum Auftragen der Struktur ausgerichtet sind, wobei die Kameras mit zumindest einem Überlappungsbereich auf die aufgebrachte Struktur ausgerichtet sind, wobei die aufgebrachte Struktur, insbesondere die Kanten der Kleberspur, auf einer umlaufenden Bahn um die Auftragseinrichtung ermittelt wird, und wobei die umlaufende Bahn derart vordefiniert ist, dass die aufgebrachte Struktur nach dem Aufbringen auf dem Substrat die umlaufende Bahn schneidet, wobei jede Kamera einen Teil der umlaufenden Bahn derart überwacht, dass die einzelnen Teile der umlaufenden Bahn der Kameras gemeinsam mit den Überlappungsbereichen eine geschlossene umlaufende Bahn im wesentlichen in Form einer Kreisbahn unter Bildung eines kreisförmigen Calipers bilden, welche als Überwachungsbereich auf dem Substrat um die Auftragseinrichtung umlaufend verläuft, und wobei die Winkelwerte der Kreisbahn von 0 bis 360 ° ein globales Koordinatensystem bilden, wobei den Bildern der einzelnen Kameras ein Segment der Kreisbahn mit jeweils angrenzenden Uberlappungsbereichen zugeordnet wird.

13. Vorrichtung nach Anspruch 12, **dadurch gekennzeichnet, dass** sich die axiale Längsachsen der einzelnen Kameras in Blickrichtung im wesentlichen mit der axialen Längsachse der Auftragseinrichtung schneidet.

14. Vorrichtung nach Anspruch 12 oder 13, **dadurch gekennzeichnet, dass** die einzelnen Kameras, insbesondere drei Kameras, in Umfangsrichtung in jeweils gleichem Abstand voneinander angeordnet sind.

15. Vorrichtung nach einem der Ansprüche 12 bis 14, **dadurch gekennzeichnet, dass** die einzelnen Kameras derart verschaltet werden, dass die Bilder aller Kameras in einer Bildersequenz gespeichert werden.

16. Vorrichtung nach Anspruch 15, **dadurch gekennzeichnet, dass** von jeder Kamera lediglich ein Streifen des Bildes unter Bildung eines Teils der Bildsequenz aufgenommen wird.

17. Vorrichtung nach einem der Ansprüche 12 bis 16, **dadurch gekennzeichnet, dass** die Kameras die umlaufende Bahn im wesentlichen in Form eines kreisförmigen calipers bilden.

18. Vorrichtung nach einem der Ansprüche 12 bis 17, **dadurch gekennzeichnet, dass** der Mittelpunkt oder das Zentrum des kreisförmigen calipers im wesentlichen mit der Stelle übereinstimmt, welche der Längsachse der Auftragseinrichtung auf dem Substrat entspricht.

19. Vorrichtung nach einem der vorhergehenden Ansprüche 12 bis 18, **dadurch gekennzeichnet, dass** die einzelnen Kameras einen Überlappungsbereich von jeweils mindestens 10°, insbesondere 30° bis 90°, zur nächsten Kamera aufweisen.

20. Vorrichtung nach einem Ansprüche 12 bis 19, **dadurch gekennzeichnet, dass** zur Kalibrierung der einzelnen Kameras für die Zuordnung der Winkelzugehörigkeit eine Kalibriervorrichtung mit einzelnen Formelementen verwendet wird, wobei die Formelemente insbesondere einen Winkelabstand von im wesentlichen 10° aufweisen.

21. Vorrichtung nach Anspruch 20, **dadurch gekennzeichnet, dass** die Kalibriervorrichtung zumindest drei Markierungsstellen aufweist, die in einem Kreisbogen der Kalibriervorrichtung von im wesentlichen 0°, 120° und 240° angeordnet sind, um drei Kameras zu kalibrieren.

22. Vorrichtung nach Anspruch 21, **dadurch gekennzeichnet, dass** sich die Markierungsstellen auf der Kreisbahn in einem Winkelbereich von jeweils im wesentlichen 10° erstrecken, wobei die Markierungsstellen insbesondere durch zumindest zwei Formelemente gebildet werden.

## Claims

1. Method for recognizing a structure to be applied onto a substrate, preferably an adhesive line or adhesive line, with at least two cameras, in particular three or more cameras, **characterized in that**
the structure to be applied is applied onto the substrate by an application facility,
and the structure applied onto the substrate by the application facility is monitored by the cameras such that
the cameras with at least one overlapping area are directed at the applied structure, whereby the applied structure, in particular the edges of the adhesive line, is determined on a surrounding track around the application facility, and whereby the surrounding track is predefined such that the applied structure intersects the surrounding track after being applied onto the substrate, **characterized in that** each camera monitors a segment of the surrounding track essentially in the form of a circular line forming a circular caliper, and wherein the angle values of the circular line from 0 to 360° form a global coordinate system, whereby a segment of the circular line with adjacent overlapping areas is assigned to the images of the individual cameras.

2. Method according to claim 1, **characterized in that** the surrounding track has a closed form around the application facility for determining the adhesive line, whereby the adhesive line on the surrounding track on the substrate is monitored by means of a projection.

3. Method according to claim 1 or 2, **characterized in that** the adhesive line on the surrounding track is determined in the form of an essentially circular caliper.

4. Method according to claim 1 or 2, **characterized in that** the adhesive line on the surrounding track is determined essentially in elliptical, polygonal form or as continuous lines.

5. Method according to any one of the preceding claims 1 to 4, **characterized in that** the center point or the center of the surrounding track essentially coincides with the site that corresponds to the site projected on the substrate by the application facility with regard to the adhesive line.

6. Method according to any one of the preceding claims 1 to 5, **characterized in that** three cameras monitor the applied structure around the application facility on the surrounding track using one overlapping area to the neighboring camera each.

7. Method according to any one of the preceding claims 1 to 6, **characterized in that** each camera monitors a part of the surrounding track such that the individual parts of the surrounding track of the cameras join with the corresponding overlapping areas to form a continuous surrounding track that progresses on the substrate and around the application facility as monitoring area.

8. Method according to any one of the preceding claims 1 to 7, **characterized in that** a first camera covers at least a range of angles from -10° to 130°, a second camera at least a range of angles from 110° to 250°, and a third camera at least a range of angles from 230° to 10°.

9. Method according to any one of the preceding claims 1 to 8, **characterized in that** a switch from one camera to the next is made automatically when the adhesive line progresses from the segment of a circular line of one camera via the overlapping area to the segment of a circular line of a different camera.

10. Method according to any one of the claims 1 to 9, **characterized in that** only a strip of the camera image is processed by each camera in order to form a sequence of images from the individual strips of the camera images, whereby the closed surrounding track is assembled from the strips of the individual camera images.

11. Method according to any one of the claims 1 to 10, **characterized in that** the individual cameras are calibrated in order to assign the angle assignment, whereby in particular a circular arc or circular line of the calibrating facility with marker points at 0°, 120°, and 240° for three cameras is used.

12. Apparatus for recognizing a structure to be applied onto a substrate, preferably an adhesive line or adhesive line, for carrying out the method according to the invention according to claims 1 to 11, whereby at least one illumination module and one sensor unit are provided, **characterized in that** the sensor unit is made up of at least two cameras, in particular three or more cameras, whereby the cameras are provided around and arranged on the facility for applying the structure such that each of the cameras is directed at the facility for applying the structure, whereby the cameras with at least one overlapping area are directed at the applied structure, and whereby the applied structure, in particular the edges of the adhesive line, is determined on a surrounding track around the application facility, and whereby the surrounding track is predefined such that the applied structure intersects the surrounding track after being applied onto the substrate, wherein each camera monitors a part of the surrounding track such the individual parts of the surrounding track of the cameras join with the corresponding overlapping areas to form a continuous surrounding track substantially in the form of a circular line by forming a circular caliper, which progresses on the substrate around the application facility as monitoring area, and wherein the angle values of the circular line from 0 to 360° form a global coordinate system, whereby a segment of the circular line with adjacent overlapping areas is assigned to the images of the individual cameras.

13. Apparatus according to claim 12, **characterized in that** the axial longitudinal axis of the individual cameras essentially intersects, in the direction of view, the axial longitudinal axis of the application facility.

14. Apparatus according to claim 12 or 13, **characterized in that** the individual cameras, in particular three cameras, are arranged at equal distances from each other in the direction of the circumference.

15. Apparatus according to any one of the claims 12 to 14, **characterized in that** the individual cameras are circuited such that the images of all cameras are stored in a sequence of images.

16. Apparatus according to claim 15, **characterized in that** each camera records only a strip of the image to form a part of the sequence of images.

17. Apparatus according to any one of the claims 12 to 16, **characterized in that** the cameras form the surrounding track essentially in the form of a circular caliper.

18. Apparatus according to any one of the claims 12 to 17, **characterized in that** the center point or the center of the circular caliper essentially coincides with the site that corresponds to the longitudinal axis of the application facility on the substrate.

19. Apparatus according to any one of the preceding claims 12 to 18, **characterized in that** the individual cameras comprise an overlapping area of at least 10°, in particular 30° to 90°, relative to the next camera.

20. Apparatus according to any one of the claims 12 to 19, **characterized in that** a calibrating device with individual form elements is used for calibrating the individual cameras for the assignment of the angle assignment, whereby these form elements comprise, in particular, an angle distance of essentially 10°.

21. Apparatus according to claim 20, **characterized in that** the calibrating device comprises at least three marker sites that are arranged in a circular arc of the calibrating device of essentially 0°, 120°, and 240°, in order to calibrate three cameras.

22. Apparatus according to claim 21, **characterized in that** the marker sites on the circular line each extend in an angle range of essentially 10°, whereby the marker sites are formed, in particular, by at least two form elements.

## Revendications

1. Procédé pour reconnaître une structure à appliquer sur un substrat, de préférence un cordon de colle ou une trace de colle, au moyen d'au moins deux caméras, en particulier de trois ou plusieurs caméras, **caractérisé en ce que**
la structure à appliquer est appliquée sur le substrat par un dispositif d'application et
la structure appliquée sur le substrat par le dispositif d'application est surveillée par les caméras de manière telle que
les caméras sont pointées sur la structure appliquée avec au moins une zone de chevauchement, la structure appliquée, en particulier les bords de la trace de colle, étant détectée sur une orbite de révolution autour du dispositif d'application et l'orbite de révolution étant prédéfinie de manière telle que la structure appliquée coupe l'orbite de révolution après l'application sur le substrat,
**caractérisé en ce que** chaque caméra surveille un segment de l'orbite de révolution sensiblement en forme d'orbite circulaire avec formation d'un calibre circulaire et les valeurs angulaires de l'orbite circulaire allant de 0 à 360° forment un système global de coordonnées, un segment de l'orbite circulaire étant, avec des zones de chevauchement respectivement adjacentes, affecté aux images des différentes caméras.

2. Procédé selon la revendication 1, **caractérisé en ce que** l'orbite de révolution servant à détecter la trace de colle constitue une forme fermée autour du dispositif d'application, la trace de colle étant surveillée sur l'orbite de révolution sur le substrat conformément à une projection.

3. Procédé selon la revendication 1 ou 2, **caractérisé en ce que** la trace de colle est détectée sur l'orbite de révolution sous la forme d'un calibre sensiblement circulaire.

4. Procédé selon la revendication 1 ou 2, **caractérisé en ce que** la trace de colle est détectée sur l'orbite de révolution sensiblement sous une forme elliptique, polygonale ou sous la forme d'une ligne.

5. Procédé selon l'une des revendications précédentes 1 à 4, **caractérisé en ce que** le point central ou le centre de l'orbite de révolution coïncide sensiblement avec l'endroit qui correspond à l'endroit, sur le substrat, projeté par le dispositif d'application relativement à la trace de colle.

6. Procédé selon l'une des revendications précédentes 1 à 5, **caractérisé en ce que** trois caméras surveillent la structure appliquée avec respectivement une zone de chevauchement avec la caméra voisine autour du dispositif d'application sur l'orbite de révolution.

7. Procédé selon l'une des revendications précédentes 1 à 6, **caractérisé en ce que** chaque caméra surveille une partie de l'orbite de révolution de manière telle que les différentes parties de l'orbite de révolution des caméras constituent, conjointement avec les zones de chevauchement, une orbite de révolution fermée qui, en tant que zone de surveillance, fait, sur le substrat, le tour du dispositif d'application.

8. Procédé selon l'une des revendications précédentes 1 à 7, **caractérisé en ce qu'**une première caméra couvre au moins une zone angulaire allant de -10° à 130°, une deuxième caméra couvre au moins une zone angulaire allant de 110° à 250° et une troisième caméra couvre au moins une zone angulaire allant de 230° à 10°.

9. Procédé selon l'une des revendications précédentes 1 à 8, **caractérisé en ce que**, sur le tracé de la trace de colle, il y a commutation automatique d'une caméra à l'autre lorsque la trace de colle va du segment de l'orbite circulaire d'une caméra vers le segment de l'orbite circulaire d'une autre caméra en passant par la zone de chevauchement.

10. Procédé selon l'une des revendications 1 à 9, **caractérisé en ce que** chaque caméra traite uniquement une bande de l'image de caméra pour constituer une séquence d'images à partir des différentes bandes des images de caméra, l'orbite de révolution fermée étant assemblée à partir des bandes des différentes images de caméra.

11. Procédé selon l'une des revendications 1 à 10, **caractérisé en ce qu'**il est procédé à un calibrage des différentes caméras pour leur associer un angle, en particulier un arc de cercle ou une orbite circulaire du dispositif de calibrage étant utilisés avec des points de marquage à 0°, 120° et 240° pour 3 caméras.

12. Dispositif permettant de reconnaître une structure à appliquer sur un substrat, de préférence un cordon de colle ou une trace de colle, pour exécuter un procédé selon les revendications 1 à 11, au moins un module d'éclairage et une unité de détection étant prévus, **caractérisé en ce que** l'unité de détection est construite à partir d'au moins deux caméras, en particulier trois ou plusieurs caméras, les caméras étant prévues autour du dispositif d'application de la structure et disposées sur celui-ci de manière telle que les caméras sont pointées chacune sur le dispositif d'application de la structure, les caméras étant pointées sur la structure appliquée avec au moins une zone de chevauchement, la structure appliquée, en particulier les bords de la trace de colle, étant détectée sur une orbite de révolution autour du dispositif d'application et l'orbite de révolution étant prédéfinie de manière telle que la structure appliquée coupe l'orbite de révolution après l'application sur le substrat, chaque caméra surveillant une partie de l'orbite de révolution de manière telle que les différentes parties de l'orbite de révolution des caméras constituent, conjointement avec les zones de chevauchement, une orbite de révolution fermée sensiblement en forme d'orbite circulaire avec formation d'un calibre circulaire, laquelle, en tant que zone de surveillance, fait, sur le substrat, le tour du dispositif d'application, et les valeurs angulaires de l'orbite circulaire allant de 0 à 360° constituant un système global de coordonnées, un segment de l'orbite circulaire étant, avec des zones de chevauchement respectivement adjacentes, affecté aux images des différentes caméras.

13. Dispositif selon la revendication 12, **caractérisé en ce que**, dans le sens du regard, l'axe longitudinal axial des différentes caméras coupe sensiblement l'axe longitudinal axial du dispositif d'application.

14. Dispositif selon la revendication 12 ou 13, **caractérisé en ce que** les différentes caméras, en particulier trois caméras, sont disposées de manière équidistante dans le sens du pourtour.

15. Dispositif selon l'une des revendications 12 à 14, **caractérisé en ce que** les différentes caméras sont couplées de manière telle que les images de toutes les caméras sont stockées dans une séquence d'images.

16. Dispositif selon la revendication 15, **caractérisé en ce que** chaque caméra prend une image uniquement d'une bande de l'image avec formation d'une partie de la séquence d'images.

17. Dispositif selon l'une des revendications 12 à 16, **caractérisé en ce que** les caméras constituent l'orbite de révolution sensiblement en forme de calibre circulaire.

18. Dispositif selon l'une des revendications 12 à 17, **caractérisé en ce que** le point central ou le centre du calibre circulaire coïncide sensiblement avec l'endroit qui correspond à l'axe longitudinal du dispositif d'application sur le substrat.

19. Dispositif selon l'une des revendications précédentes 12 à 18, **caractérisé en ce que** les différentes caméras présentent une zone de chevauchement de respectivement au moins 10°, en particulier de 30° à 90°, avec la caméra suivante.

20. Dispositif selon l'une des revendications 12 à 19, **caractérisé en ce que**, pour calibrer les différentes caméras pour leur associer un angle, on utilise un dispositif de calibrage avec différents éléments de forme déterminée, les éléments de forme déterminée présentant en particulier une distance angulaire de sensiblement 10°.

21. Dispositif selon la revendication 20, **caractérisé en ce que** le dispositif de calibrage comporte au moins trois points de marquage qui sont situés sur un arc de cercle du dispositif de calibrage de sensiblement 0°, 120° et 240° pour calibrer les trois caméras.

22. Dispositif selon la revendication 21, **caractérisé en ce que** les points de marquage s'étendent sur l'orbite circulaire dans une plage angulaire de sensiblement 10° respectivement, les points de marquage étant constitués en particulier par au moins deux éléments de forme déterminée.
